# EUROPEAN PATENT SPECIFICATION

(11) **EP 4 117 911 B1**
(45) Date of publication and mention of the grant of the patent: **12.08.2026**
(21) Application number: 21711860.3
(22) Date of filing: 12.03.2021
(51) Int. Cl.: B32B 7/12, B32B 17/10, B60J 1/00

(54) **VEHICLE WINDSCREEN ASSEMBLY**
FAHRZEUGSCHEIBENANORDNUNG
ENSEMBLE DE PARE-BRISE DE VÉHICULE

(30) Priority: 12.03.2020 GB 202003628
(43) Date of publication of application: 18.01.2023
(73) Proprietor: Pilkington Group Limited, Lathom Nr. Ormskirk Lancashire L40 5UF (GB)
(72) Inventor: TELEGA, Tomasz, 27-600 Sandomierz (PL)
(74) Representative: Stanley, Andrew Thomas
(86) International application number: PCT/EP2021/056401
(87) International publication number: WO 2021/180957

(56) References cited:
- US-A1- 2004 209 053
- US-A1- 2005 016 675
- US-B2- 7 901 532

## Description

The present invention relates to a vehicle windscreen assembly and to a method of bonding a laminated glazing, in particular a windscreen, in an aperture in a vehicle.

Conventional laminated glazings for automotive windscreens comprise two plies of soda-lime-silicate glass joined by a sheet of polyvinyl butyral (PVB). Typically, each glass sheet is 2.1mm thick and the PVB sheet is typically 0.76mm thick.

Typically, an automotive windscreen is bonded into an opening in the vehicle body using a suitable adhesive. Water resistant and weather resistant polyurethane glass glue is described in CN108300397A. A method of preparing glass glue for a vehicle is disclosed in CN104845579A.

As is known in the art, a laminated automotive windscreen provides the driver of the vehicle with improved safety benefits. However, vehicle manufacturers are also addressing vehicle safety in the event of a forward collision with a pedestrian.

In the event of a collision with a pedestrian, the pedestrian may impact the vehicle windscreen thereby causing further injury to the pedestrian.

A composite safety glass panel with a predetermined breaking point is described in US200403039A1. A laminated safety glass pane having a predetermined breaking location and an impact point is described in US200409053A1. Pre-fracture belt escape glass for a high-speed railway is described in CN104453597A.

US2005/0016675A1 describes an adhesive agent with thermoexpandable microcapsules which act as pressure actuators dispersed therein. The microcapsules are heat triggered so as to release at least one expandable volatile agent encapsulated within the microcapsule shell.

US7,901,532B2 describes a system and a method of improving the debonding of two or more surfaces together. Thermoexpanadable microspheres and thermal energy is used to debond interfaces in an adhesive system or as vehicle carriers.

US2004/0209053A1 describes a laminated safety glass pane having a predetermined breaking location and an impact point which contains at least two toughened glass panes and an intermediate layer, wherein predetermined breaking lines are formed by discontinuities in the intermediate layer in order to create an emergency exit.

The present invention aims to provide a vehicle windscreen assembly that is arranged to lower the risks of serious pedestrian injuries in case the vehicle collides with a pedestrian.

Accordingly, from a first aspect the present invention provides a vehicle windscreen assembly comprising a vehicle having an aperture for a windscreen and a laminated glazing bonded in the aperture by an adhesive, the laminated glazing comprising a first sheet of glazing material joined to a second sheet of glazing material by at least one sheet of adhesive interlayer material, each of the first and second sheets of glazing material having a respective first major surface and second major surface, wherein the second major surface of the first sheet of glazing material faces the first major surface of the second sheet of glazing material, further wherein the adhesive contacts the second major surface of the second sheet of glazing material and comprises incompressible particles therein such that upon an impact with the first major surface of the first sheet of glazing material, the particles cause the second sheet of glazing material to break.

The adhesive bonds the laminated glazing in the aperture by contacting portions of the vehicle bodywork forming the aperture and contacting the second major surface of the second sheet of glazing material.

The laminated glazing is arranged in the aperture in the vehicle such that the first major surface of the first sheet of glazing material faces the exterior of the vehicle and the second major surface of the second sheet of glazing material faces the interior of the vehicle.

The particles are sufficiently sized and are suitably incompressible.

The adhesive that bonds the laminated glazing in the aperture has a thickness and preferably the particles have a major dimension that is at least 10% or 20% or 30% or 40% or 50% or 60% or 70% or 80% or 90% or 100% of the thickness of the adhesive.

In some embodiments the first sheet of glazing material has a thickness between 1.2mm and 5mm, preferably between 1.3mm and 3mm

In some embodiments the second sheet of glazing material has a thickness between 1.2mm and 5mm, preferably between 1.3mm and 3mm.

In some embodiments the second sheet of glazing material is thinner than the first sheet of glazing material.

In some embodiments the first major surface of the first sheet of glazing material is a convex surface and the second major surface of the second sheet of glazing material is a convex surface.

The laminated glazing has other preferable features.

Preferably the laminated glazing is curved in at least one direction. Preferably the radius of curvature in the at least one direction is between 500mm and 20000mm, more preferably between 1000mm and 8000mm.

Preferably the at least one sheet of adhesive interlayer material comprises polyvinyl butyral (PVB), acoustic modified PVB, a copolymer of ethylene such as ethylene vinyl acetate (EVA), polyurethane (PU), poly vinyl chloride (PVC), a copolymer of ethylene and methacrylic acid (EMA) or Uvekol (a liquid curable resin).

Preferably the at least one sheet of adhesive interlayer material is a sheet of polyvinyl butyral (PVB), EVA, PVC, EMA, polyurethane, acoustic modified PVB or Uvekol (a liquid curable resin).

Preferably the at least one sheet of adhesive interlayer material has a thickness between 0.3mm and 2.3mm, more preferably between 0.3mm and 1.6mm, most preferably between 0.3 and 0.8mm.

Preferably the first and/or second sheet of glazing material has a thickness between 1mm and 3mm.

Preferably the first and/or second sheet of glazing material has a thickness between 1.4mm and 2.8mm, more preferably between 1.6mm and 2.3mm.

Preferably the first and/or second sheet of glazing material is a sheet of soda-lime-silicate glass. Soda-lime-silicate glass is often referred to as soda-lime-silica glass, or simply a sheet "soda-lime" glass.

Preferably the first and/or second sheet of glazing material is a sheet of soda-lime-silicate glass, in particular a sheet of float glass.

Preferably the second sheet of glazing material is a sheet of alkali aluminosilicate glass.

Preferably the second sheet of glazing material comprises at least about 6wt% (percent by weight) aluminium oxide (Al₂O₃).

Preferably the second sheet of glazing material is chemically strengthened i.e. chemically strengthened glass. When the second sheet of glazing material is chemically strengthened, preferably the second sheet of glazing material has a thickness less than 1.2mm, more preferably between 0.3mm and 1mm, even more preferably between 0.4mm and 0.9mm.

For the avoidance of doubt, in the first aspect of the present invention the laminated glazing is a windscreen, although it will be readily apparent that the adhesive comprising particles may be used to bond other glazings, which may or may not be laminated, into other apertures which may be in a vehicle or building.

The present invention also provides from a second aspect a method of bonding a laminated glazing in an aperture in a vehicle, the laminated glazing comprising a first sheet of glazing material joined to a second sheet of glazing material by at least one sheet of adhesive interlayer material, each of the first and second sheets of glazing material having a respective first major surface and second major surface, wherein the second major surface of the first sheet of glazing material faces the first major surface of the second sheet of glazing material, the laminated glazing being bonded in the aperture in the vehicle using a bonding step, the bonding step comprising providing an adhesive and incompressible particles between the second major surface of the second sheet of glazing material and a first portion of the vehicle forming the aperture in the vehicle, wherein following the bonding step the adhesive bonds the laminated glazing in the aperture in the vehicle.

Preferably the particles are mixed with the adhesive prior to bonding step.

Preferably in the bonding step, the adhesive is applied as a layer, thereafter the particles are added to the layer of adhesive.

Preferably in the bonding step, the particles are applied to the first portion of the vehicle forming the aperture in the vehicle and/or the second major surface of the second sheet of glazing material, followed by applying the adhesive.

Preferably an additional layer of adhesive is applied on the particles.

Preferably the laminated glazing is a vehicle windscreen.

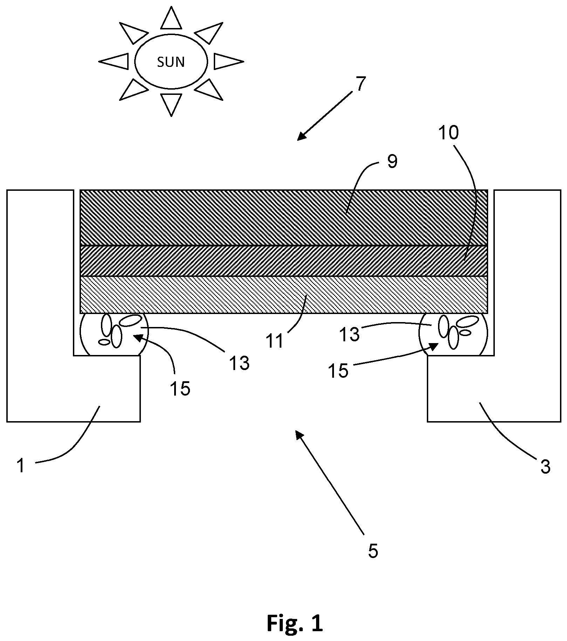

The present invention will now be described with reference to the following figure in which: Figure 1 is a cross section view of a vehicle windscreen assembly in accordance with the present invention.

Figure 1 shows a cross section of a vehicle window assembly in accordance with the present invention.

Vehicle body work portions 1, 3 define an aperture 5 in a vehicle. A laminated glazing 7 is bonded in the aperture 5.

The laminated glazing comprises an outer pane 9 and an inner pane 11. An "inner pane" is a pane that faces the interior of the vehicle in which the laminated glazing is installed. Likewise, an "outer pane" is a pane that faces the exterior of the vehicle in which the laminated glazing 7 is installed.

The inner pane 11 has a major surface that faces the interior of the vehicle in which the laminated glazing 7 is installed, said major surface being referred to as an inner facing surface. Likewise, the outer pane 9 has a major surface that faces the exterior of the vehicle in which the laminated glazing 7 is installed, said major surface being referred to as an outer facing surface.

The outer pane 9 is joined to the inner pane 11 by a sheet of PVB 10 as is conventional in the art. The sheet of PVB 10 may be replaced by an interlayer structure comprising two or more sheets of suitable interlayer material, for example at least two sheets of PVB, EVA etc.

In this example the outer pane 9 is a sheet of soda-lime-silicate glass having a composition such as clear float glass, typically with the addition of iron oxide as a tinting agent to provide the laminated glazing with some form of solar control. The outer pane 9 has a thickness of 2.3mm although the thickness may be in the range 1.4mm to 2.5mm or in the range 1.6mm to 2.3mm.

A typical soda-lime-silicate glass composition is (by weight), SiO₂ 69 - 74 %; Al₂O₃ 0 - 3 %; Na₂O 10 - 16 %; K₂O 0 - 5 %; MgO 0 - 6 %; CaO 5 - 14 %; SO3 0 - 2 %; Fe₂O₃ 0.005 - 2 %. The glass composition may also contain other additives, for example, refining aids, which would normally be present in an amount of up to 2 %. The soda-lime-silica glass composition may contain other colouring agents such as Co₃O₄, NiO and Se to impart to the glass a desired colour when viewed in transmitted light. The transmitted glass colour may be measured in terms of a recognised standard such as BS EN410.

The inner pane 11 is also a sheet of soda-lime-silicate glass having a thickness of 1.6mm, but the second sheet may have a thickness may be in the range 1.4mm to 2.5mm and is preferably not as thick as the outer pane 9.

The sheet of PVB 10 has a thickness of 0.76mm but may have a thickness between 0.3mm and 1.8mm.

Other suitable adhesive interlayers include PVC, EVA, EMA and polyurethane.

The laminated glazing 7 may be curved in one or more directions. Preferably the radius of curvature in one of the one or more directions is between 1000mm and 8000mm.

When the laminated glazing is curved in two directions, suitably each direction of curvature is orthogonal to the other. Suitably the radius of curvature in one or both directions of curvature is between 1000mm and 8000mm.

The laminated glazing 7 is bonded in the aperture by an adhesive 13 in contact with vehicle body portions 1, 3 and the inner facing surface of the inner pane 11. Any known adhesive used to bond windscreens into vehicles apertures is suitable, for example the adhesive may be a polyurethane adhesive. As is known in the art, the adhesive may be applied as a layer around the periphery of the laminated glazing 7. The adhesive may be applied to the vehicle body portions 1, 3 and/or peripheral regions of the inner facing surface of the inner pane 11.

Included in the adhesive 13 are particles 15, that may be homogenously distributed in the adhesive and may comprise one or more different shape of particle. Suitable particles include precision-shaped grains of the type found in 3M^{™} Cubitron^{™} abrasives. Such grains are triangular shaped.

The particles 15 may be made of a suitably hard material such as silicon carbide or tungsten carbide.

As can be seen from figure 1, the adhesive 13 is between the body portions 1, 3 and the inner pane 11. The particles 15 are also between the inner pane 11 and the body portions 1, 3.

The particles may be mixed with the adhesive 13 prior to application. Alternatively, the adhesive may first be applied, and the particles added to the adhesive layer that is formed. An additional layer of adhesive may be applied on top of the particles. Further alternatively, the particles may be applied to the vehicle body portion and/or windscreen, followed by applying the adhesive.

Upon an impact with the outer facing surface of the outer pane 9, the adhesive 13 is compressed but some of the particles 15 are not able to be compressed. The particles 15 act as point contacts to contact the inner facing surface of the inner pane 11 thereby causing the inner pane 11 to break.

This reduces the rigidity of the laminated glazing 7, thereby reducing the seriousness of injury in the event a pedestrian collides with the outer pane 9.

In an alternative example, the inner pane 11 is replaced by a sheet of 0.7mm thick aluminosilicate glass that has been chemically strengthened. Other glass compositions may be used that are able to be chemically strengthened. A preferred thickness of the chemically strengthened glass sheet is less than 1.2mm, more preferable between 0.3mm and 1mm, even more preferably between 0.4mm and 0.9mm.

## Claims

1. A vehicle windscreen assembly comprising a vehicle having an aperture (5) for a windscreen and a laminated glazing (7) bonded in the aperture by an adhesive (13), the laminated glazing comprising a first sheet of glazing material (9) joined to a second sheet of glazing material (11) by at least one sheet of adhesive interlayer material (10), each of the first and second sheets of glazing material having a respective first major surface and second major surface, wherein the second major surface of the first sheet of glazing material faces the first major surface of the second sheet of glazing material, further wherein the adhesive contacts the second major surface of the second sheet of glazing material and comprises incompressible particles (15) therein such that upon an impact with the first major surface of the first sheet of glazing material, the incompressible particles act as point contacts to contact the second major surface of the second sheet of glazing material to cause the second sheet of glazing material to break.

2. A vehicle windscreen assembly according to claim 1, wherein the adhesive that bonds the laminated glazing in the aperture has a thickness and preferably the particles have a major dimension that is at least 10% or 20% or 30% or 40% or 50% or 60% or 70% or 80% or 90% or 100% of the thickness of the adhesive.

3. A vehicle windscreen assembly according to claim 1 or claim 2, wherein the first sheet of glazing material has a thickness between 1mm and 5mm, preferably between 1.3mm and 3mm.

4. A vehicle windscreen assembly according to any of the preceding claims, wherein the second sheet of glazing material has a thickness between 1mm and 5mm, preferably between 1.3mm and 3mm, or wherein the second sheet of glazing material is chemically strengthened and has a thickness less than 1.2mm.

5. A vehicle windscreen assembly according to any of the preceding claims, wherein the second sheet of glazing material is thinner than the first sheet of glazing material.

6. A vehicle windscreen assembly according to any of the preceding claims, wherein the laminated glazing has a thickness between 3mm and 10mm.

7. A vehicle windscreen assembly according to any of the preceding claims, wherein the incompressible particles are made of silicon carbide or tungsten carbide.

8. A method of bonding a laminated glazing (7) in an aperture (5) in a vehicle,
the laminated glazing comprising a first sheet of glazing material (9) joined to a second sheet of glazing material (11) by at least one sheet of adhesive interlayer material (10), each of the first and second sheets of glazing material having a respective first major surface and second major surface, wherein the second major surface of the first sheet of glazing material faces the first major surface of the second sheet of glazing material,
the laminated glazing being bonded in the aperture in the vehicle using a bonding step,
the bonding step comprising providing an adhesive (13) and incompressible particles (15) between the second major surface of the second sheet of glazing material and a first portion (1, 3) of the vehicle forming the aperture in the vehicle,
wherein following the bonding step the adhesive bonds the laminated glazing in the aperture in the vehicle.

9. A method according to claim 8, wherein in the bonding step, the particles are mixed with the adhesive prior to application.

10. A method according to claim 8 or claim 9, wherein in the bonding step, the adhesive is applied as a layer, thereafter the particles are added to the layer of adhesive.

11. A method according to any of the claims 8 to 10, wherein the particles are applied to the first portion of the vehicle forming the aperture in the vehicle and/or the second major surface of the second sheet of glazing material, followed by applying the adhesive.

12. A method according to any of the claims 8 to 11, wherein an additional layer of adhesive is applied on the particles.

13. A method according to any of the claims 8 to 12, wherein the laminated glazing is a vehicle windscreen.

14. A method according to any of the claims 8 to 12, wherein the incompressible particles are made of silicon carbide or tungsten carbide.

## Patentansprüche

1. Fahrzeugwindschutzscheibenbaugruppe, umfassend ein Fahrzeug mit einer Öffnung (5) für eine Windschutzscheibe und eine Verbundverglasung (7), die mittels eines Klebstoffs (13) in der Öffnung befestigt ist, wobei die Verbundverglasung eine erste Scheibe aus Verglasungsmaterial (9) umfasst, die mit einer zweiten Scheibe aus Verglasungsmaterial (11) durch mindestens eine Schicht aus klebendem Zwischenlagenmaterial (10) verbunden ist, wobei sowohl die erste als auch die zweite Scheibe aus Verglasungsmaterial jeweils eine erste Hauptfläche und eine zweite Hauptfläche aufweisen, wobei die zweite Hauptfläche der ersten Scheibe aus Verglasungsmaterial der ersten Hauptfläche der zweiten Scheibe aus Verglasungsmaterial zugewandt ist, und wobei ferner der Klebstoff die zweite Hauptfläche der zweiten Scheibe aus Verglasungsmaterial berührt und in sich inkompressible Partikel (15) enthält, so dass bei einem Aufprall auf die erste Hauptfläche der ersten Glasplatte die inkompressiblen Partikel als Punktkontakte wirken, um die zweite Hauptfläche der zweiten Glasplatte zu berühren und ein Brechen der zweiten Glasplatte zu bewirken.

2. Fahrzeugwindschutzscheibenbaugruppe nach Anspruch 1, bei der der Klebstoff, der die Verbundverglasung in der Öffnung zusammenhält, eine Dicke aufweist und vorzugsweise die Partikel eine Hauptabmessung haben, die mindestens 10 % oder 20 % oder 30 % oder 40 % oder 50 % oder 60 % oder 70 % oder 80 % oder 90 % oder 100 % der Dicke des Klebstoffs beträgt.

3. Fahrzeugwindschutzscheibenbaugruppe nach Anspruch 1 oder Anspruch 2, bei der die erste Scheibe aus Verglasungsmaterial eine Dicke zwischen 1 mm und 5 mm, vorzugsweise zwischen 1,3 mm und 3 mm, aufweist.

4. Fahrzeugwindschutzscheibenbaugruppe nach einem der vorstehenden Ansprüche, bei der die zweite Scheibe aus Verglasungsmaterial eine Dicke zwischen 1 mm und 5 mm, vorzugsweise zwischen 1,3 mm und 3 mm, aufweist oder bei der die zweite Scheibe aus Verglasungsmaterial chemisch gehärtet ist und eine Dicke von weniger als 1,2 mm aufweist.

5. Fahrzeugwindschutzscheibenbaugruppe nach einem der vorstehenden Ansprüche, bei der die zweite Scheibe aus Verglasungsmaterial dünner ist als die erste Scheibe aus Verglasungsmaterial.

6. Fahrzeug-Windschutzscheibenanordnung nach einem der vorstehenden Ansprüche, bei der die Verbundverglasung eine Dicke zwischen 3 mm und 10 mm aufweist.

7. Fahrzeug-Windschutzscheibenanordnung nach einem der vorstehenden Ansprüche, bei der die inkompressiblen Partikel aus Siliziumkarbid oder Wolframkarbid bestehen.

8. Verfahren zum Verkleben einer Verbundverglasung (7) in einer Öffnung (5) eines Fahrzeugs,
wobei die Verbundverglasung eine erste Scheibe aus Verglasungsmaterial (9) umfasst, die mit einer zweiten Scheibe aus Verglasungsmaterial (11) durch mindestens eine Schicht aus klebendem Zwischenlagenmaterial (10) verbunden ist, wobei sowohl die erste als auch die zweite Scheibe aus Verglasungsmaterial jeweils eine erste Hauptfläche und eine zweite Hauptfläche aufweisen, wobei die zweite Hauptfläche der ersten Scheibe aus Verglasungsmaterial der ersten Hauptfläche der zweiten Scheibe aus Verglasungsmaterial zugewandt ist,
wobei die Verbundverglasung in der Öffnung des Fahrzeugs mittels eines Klebeschritts befestigt wird,
wobei der Klebeschritt das Einbringen eines Klebstoffs (13) und nicht komprimierbarer Partikel (15) zwischen die zweite Hauptfläche der zweiten Scheibe aus Verglasungsmaterial und einen ersten Abschnitt (1, 3) des Fahrzeugs umfasst, der die Öffnung im Fahrzeug bildet,
wobei nach dem Klebeschritt der Klebstoff die Verbundverglasung in der Öffnung des Fahrzeugs festklebt.

9. Verfahren nach Anspruch 8, bei dem im Klebeschritt die Partikel mit dem Klebstoff vor dem Auftragen vermischt werden.

10. Verfahren nach Anspruch 8 oder Anspruch 9, bei dem im Klebeschritt der Klebstoff als Schicht aufgetragen wird und anschließend die Partikel zu der Klebstoffschicht hinzugefügt werden.

11. Verfahren nach einem der Ansprüche 8 bis 10, bei dem die Partikel auf den ersten Abschnitt des Fahrzeugs, der die Öffnung im Fahrzeug bildet, und/oder die zweite Hauptfläche der zweiten Scheibe aus Verglasungsmaterial aufgebracht werden, gefolgt vom Auftragen des Klebstoffs.

12. Verfahren nach einem der Ansprüche 8 bis 11, bei dem eine zusätzliche Klebstoffschicht auf die Partikel aufgetragen wird.

13. Verfahren nach einem der Ansprüche 8 bis 12, bei dem die Verbundverglasung eine Fahrzeugwindschutzscheibe ist.

14. Verfahren nach einem der Ansprüche 8 bis 12, bei dem die inkompressiblen Partikel aus Siliziumkarbid oder Wolframkarbid bestehen.

## Revendications

1. Ensemble de pare-brise de véhicule comprenant un véhicule comportant une ouverture (5) destinée à un pare-brise et un vitrage feuilleté (7) collé dans l'ouverture par un adhésif (13), le vitrage feuilleté comprenant une première feuille de matériau de vitrage (9) liée à une seconde feuille de matériau de vitrage (11) par au moins une feuille de matériau intercalaire adhésif (10), chacune des première et seconde feuilles de matériau de vitrage comportant une première surface majeure et une seconde surface majeure, dans lequel la seconde surface majeure de la première feuille de matériau de vitrage fait face à la première surface majeure de la seconde feuille de matériau de vitrage, dans lequel, en outre, l'adhésif contacte la seconde surface majeure de la seconde feuille de matériau de vitrage et comprend des particules incompressibles (15) en son sein de sorte que, lors d'un impacte avec la première surface majeure de la première feuille de matériau de vitrage, les particules incompressibles agissent comme des contacts ponctuels pour contacter la seconde surface majeure de la seconde feuille de matériau de vitrage pour amener la seconde feuille de matériau de vitrage à casser.

2. Ensemble de pare-brise de véhicule selon la revendication 1, dans lequel l'adhésif qui colle le vitrage feuilleté dans l'ouverture a une épaisseur et, de préférence, les particules ont une dimension majeure qui correspond à au moins 10 % ou 20 % ou 30 % ou 40% ou 50% ou 60 % ou 70 % ou 90% ou 100 % de l'épaisseur de l'adhésif.

3. Ensemble de pare-brise de véhicule selon la revendication 1 ou la revendication 2, dans lequel la première feuille de matériau de vitrage a une épaisseur comprise entre 1 mm et 5 mm, de préférence entre 1,3 mm et 3 mm.

4. Ensemble de pare-brise de véhicule selon l'une quelconque des revendications précédentes, dans lequel la seconde feuille de matériau de vitrage a une épaisseur comprise entre 1 mm et 5 mm, de préférence entre 1,3 mm et 3 mm, ou dans lequel la seconde feuille de matériau de vitrage est chimiquement renforcée et a une épaisseur inférieure à 1,2 mm.

5. Ensemble de pare-brise de véhicule selon l'une quelconque des revendications précédentes, dans lequel la seconde feuille de matériau de vitrage est plus mince que la première feuille de matériau de vitrage.

6. Ensemble de pare-brise de véhicule selon l'une quelconque des revendications précédentes, dans lequel le vitrage feuilleté a une épaisseur comprise entre 3 mm et 10 mm.

7. Ensemble de pare-brise de véhicule selon l'une quelconque des revendications précédentes, dans lequel les particules incompressibles sont en carbure de silicium ou en carbure de tungstène.

8. Procédé de collage d'un vitrage feuilleté (7) dans une ouverture (5) d'un véhicule comprenant,
le vitrage feuilleté comprenant une première feuille de matériau de vitrage (9) liée à une seconde feuille de matériau de vitrage (11) par au moins une feuille de matériau intercalaire adhésif (10), chacune des première et seconde feuilles de matériau de vitrage comportant une première surface majeure et une seconde surface majeure respectives, dans lequel la seconde surface majeure de la première feuille de matériau de vitrage fait face à la première surface majeure de la seconde feuille de matériau de vitrage,
le vitrage feuilleté étant collé dans l'ouverture du véhicule en faisant intervenir une étape de collage,
l'étape de collage consistant à utiliser un adhésif (13) et des particules incompressibles (15) entre la seconde surface majeure de la seconde feuille de matériau de vitrage et une première partie (1, 3) du véhicule formant l'ouverture dans le véhicule,
dans lequel, à la suite de l'étape collage, l'adhésif colle le vitrage feuilleté dans l'ouverture du véhicule.

9. Procédé selon la revendication 8, dans lequel, lors de l'étape de collage, les particules sont mélangées à l'adhésif avant l'application.

10. Procédé selon la revendication 8 ou la revendication 9, dans lequel, lors de l'étape de collage, l'adhésif est appliqué sous forme de couche, après quoi les particules sont ajoutées à la couche d'adhésif.

11. Procédé selon l'une quelconque des revendications 8 à 10, dans lequel les particules sont appliquées à la première partie du véhicule formant l'ouverture dans le véhicule et/ou à la seconde surface majeure de la seconde feuille de matériau de vitrage, puis l'adhésif est appliqué.

12. Procédé selon l'une quelconque des revendications 8 à 11, dans lequel une couche supplémentaire d'adhésif est appliquée aux particules.

13. Procédé selon l'une quelconque des revendications 8 à 12, dans lequel le vitrage feuilleté est un pare-brise de véhicule.

14. Procédé selon l'une quelconque des revendications 8 à 12, dans lequel les particules incompressibles sont en carbure de silicium ou en carbure de tungstène.
